# EUROPEAN PATENT APPLICATION

(11) **EP 2 806 385 A1**
(43) Date of publication of application: **26.11.2014**
(21) Application number: 13002710.5
(22) Date of filing: 24.05.2013
(51) Int. Cl.: G06Q 10/10

(54) **Client identifying data (CID) target-state-compliant computer-executable applications**

(71) Applicant: UBS AG, 8000 Zürich (CH)
(72) Inventor: Pohl, Bartholomäus Johannes, 8489 Wildberg (CH); Haller, Thomas Ralf, 8913 Ottenbach (CH); Marek, Johann Franz, 8455 Ruedlingen (CH); Schaffluetzel, Thierry Daniel, 8807 Freienbach (CH)
(74) Representative: Röthinger, Rainer

(57) **Abstract**

An approach for facilitating client identifying data (CID) target-state-compliant computer-executable applications is disclosed. In some implementations, a CID questionnaire that includes one or more requests for information relating to CID exposure associated with an application may be provided to a first user. One or more inputs to the one or more information requests may be received from the first user. Current state information associated with the application may be determined based on the one or more inputs and one or more CID-related criteria. The current state information may include risk information indicating current CID exposure associated with the application. Target state information associated with the application may be received. Remediation information associated with the application may be provided to one or more users. The remediation information may be determined based on the current statement information and the target statement information.

## Description

### Field of the Disclosure

The present disclosure relates generally to facilitation of client identifying data (CID) target-state-compliant computer-executable applications.

### Background

While intentional conduct by unauthorized entities (e.g., hacking, malware, etc.) may be one cause of unauthorized exposure of CID maintained by an organization, a significant amount of the unauthorized CID exposure is caused by inadvertent or intentional conduct by internal entities that can readily access the CID. Among other issues, for instance, personnel inside of the organization that have access to certain CID via one or more applications utilized by the organization may reveal the CID to entities outside the organization in exchange for payment.

### Summary

One aspect of the disclosure relates to methods, apparatuses, and/or systems for facilitating CID target-state-compliant computer-executable applications. In one implementation, a method may comprise: providing, to a first user, a CID questionnaire that includes one or more requests for information relating to CID exposure associated with an application; receiving, from the first user, one or more inputs to the one or more information requests; determining current state information associated with the application based on the one or more inputs and one or more CID-related criteria, wherein the current state information includes risk information indicating current CID exposure associated with the application; receiving target state information associated with the application; and providing remediation information associated with the application to one or more users, wherein the remediation information is determined based on the current state information and the target state information.

In another implementation, a system may include one or more processors executing one or more computer program modules that cause the system to: provide, to a first user, a CID questionnaire that includes one or more requests for information relating to CID exposure associated with an application; receive, from the first user, one or more inputs to the one or more information requests; determine current state information associated with the application based on the one or more inputs and one or more CID-related criteria, wherein the current state information includes risk information indicating current CID exposure associated with the application; receive target state information associated with the application; and provide remediation information associated with the application to one or more users, wherein the remediation information is determined based on the current state information and the target state information.

These and other features of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### Brief Description of the Drawings

The present disclosure is illustrated by way of example, and not by way of limitation, in the figures of the accompanying drawing and in which like reference numerals refer to similar elements.
FIG. 1 illustrates a diagram of a system capable of facilitating CID target-state-compliant computer-executable applications, in accordance with one or more implementations.
FIG. 2 illustrates a diagram of the components of a compliance platform, in accordance with one or more implementations.
FIG. 3 illustrates a flowchart of a process for facilitating CID target-state-compliant computer-executable applications, in accordance with one or more implementations.
FIG. 4 illustrates a flowchart of a process for facilitating continued compliance with a CID target state, in accordance with one or more implementations.
FIG. 5 illustrates a diagram of user roles for facilitating CID target-state-compliance computer-executable applications, in accordance with one or more implementations.
FIG. 6 illustrates a flowchart of a process for a use case of facilitating CID target-state-compliance computer-executable applications, in accordance with one or more implementations.
FIG. 7 illustrates a flowchart of a process for a use case of facilitating continued compliance with a CID target state, in accordance with one or more implementations.
FIG. 8 illustrates a diagram of various states of a CID questionnaire, in accordance with one or more implementations.
FIG. 9 illustrates a diagram of various states with respect to a CID target state, in accordance with one or more implementations.
FIG. 10 illustrates a diagram of various states of a compliance status, in accordance with one or more implementations.
FIG. 11 illustrates a diagram of a user interface depicting current state information, target state information, and/or other information associated with an application, in accordance with one or more implementations.
FIG. 12 illustrates a diagram of an exposure/severity chart along with CID-related criteria from which the exposure/severity chart may be based, in accordance with one or more implementations.

### Detailed Description

Examples for facilitating CID target-state-compliant computer-executable applications are disclosed. In the following description, for the purposes of explanation, numerous specific details are set forth in order to provide a thorough understanding of the implementations of the invention. It will be appreciated, however, by one skilled in the art that the implementations of the invention may be practiced without these specific details or with an equivalent arrangement. In other instances, well-known structures and devices are shown in block diagram form in order to avoid unnecessarily obscuring the implementations of the invention.

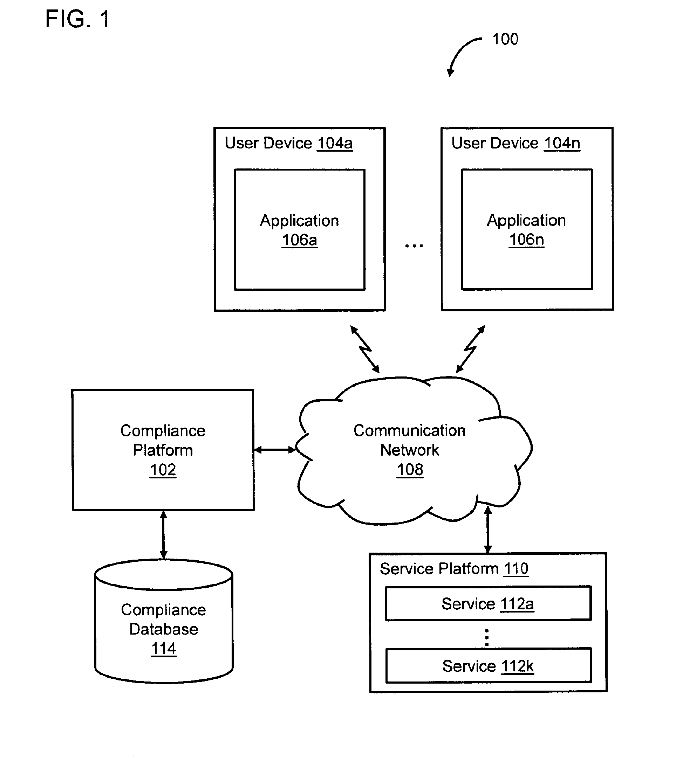

FIG. 1 illustrates a diagram of a system 100 capable of facilitating CID target-state-compliant computer-executable applications, in accordance with one or more implementations. As discussed, a significant amount of unauthorized exposure of CID maintained by an organization is caused by inadvertent or intentional conduct by entities that can readily access the CID. For example, among other issues, personnel inside the organization may readily have unnecessary access to CID via one or more applications that may not be compliant with one or more current CID policies of the organization.

To address the above issues, the system 100 may facilitate modification of applications to become compliant with target states associated with those applications. Such compliance may, for instance, be effectuated by capturing and affirming current state information systematically on an application level through CID questionnaires, and then assessing risk associated with the current state information and defining remedial actions for an application to become compliant with associated target state information. As shown in FIG. 1, the system 100 may include a compliance platform 102, a user device 104 (or multiple user devices 104a-104n) having an application 106 (or multiple applications 106a-106n), a communication network 108, a service platform 110 that includes one or more services 112 (or services 112a-112k), a compliance database 114, and/or other components. It should be noted that the compliance platform 102 (or various components of the platform 102) may be a separate entity of the system 100, a part of one or more services 112 of the service platform 110, and/or included within the user device 104 (e.g., as part of application 106). As such, in some implementations, the components of the compliance platform 102 may be executed as one or more components of the separate entity, the one or more services 112, and/or the user device 104.

The compliance platform 102 may interact with various components of the system 100 to facilitate CID target-state-compliant applications. In one implementation, the compliance platform 102 may receive CID questionnaires from one or more sources, such as the compliance database 114, the services 112, or other sources. The CID questionnaires may, for instance, be received from the one or more sources via the communication network 108. In some implementations, the compliance database 114 may include application identifiers, CID questionnaires, current state information, target state information, remediation information, compliance status information, or other information associated with applications that may be maintained by the system 100.

In certain implementations, the compliance platform 102 may provide, to a first user, a CID questionnaire that includes one or more requests for information relating to CID exposure associated with an application. Responsive to providing the CID questionnaire, the compliance platform 102 may receive, from the first user, one or more inputs to the information request. The compliance platform 102 may determine current state information associated with the application based on the one or more inputs and one or more CID-related criteria.

By way of example, the current state information may include risk information or other state information associated with the application. The risk information may indicate current CID exposure associated with the application, severity of the current CID exposure, and/or other information relating to the current CID exposure. In one use case, the current CID exposure may include CID exposure associated with the application at a time of the receipt of the one or more inputs. In this way, the current state information may include a mapping of the current CID exposure along with the severity of the current CID exposure to enable users, administrators, managers, or other individuals of an organization to assess and remedy risks associated with applications that may be utilized by the organization.

In various implementations, the current CID exposure may be determined based on one or more of CID types of exposed CID (e.g., the exposed CID may be determined based on the inputs to the information requests in the CID questionnaire), types of clients associated with the exposed CID, an amount of the clients associated with the exposed CID, or other CID-related criteria. In some implementations, the severity of the current CID exposure may be determined based on one or more of an amount of users to which the exposed CID is accessible, types of users to which the exposed CID is accessible, domains in which the exposed CID is accessible (e.g., jurisdiction, divisions/groups, or other domain types), data protection being applied for the exposed CID (e.g., encryption, entitlement review workflow, authentication, location-aware access control, service access, data area access, etc.), or other CID-related criteria. By way of example, Table 1 below may, for instance, represent at least some of the CID-related criteria from which a determination of the current CID exposure may be based. As indicated by Table 1 below, the current CID exposure may be calculated based on the values, default values, weighting factors, or other attributes associated with the corresponding CID-related criteria. In other examples, different ones of criteria, values, default values, weighting factors, or other attributes may be utilized in lieu of or in addition to those provided by Table 1 below. In one use case, for instance, in the medical context, the "Ultra High Net Worth" type of client may be replaced with a "Highly Infectious Patient" type of client.

**Table 1**

| **CID-related Criteria** | **Potential characteristic** | **Value** | **Default value** | **Weighting factor** |
|---|---|---|---|---|
| Type of CID | - Direct CID | - 20 | 24 | x4 |
| | - Indirect CID (and/or sensitive identique | - 10 | | |
| | - Combinations that can become CID | | | |
| | - No CID | - 4 | | |
| | | - 0 | | |
| Type of Client | - Ultra High Net Worth | - 20 | 24 | x2 |
| | - Global Family Office | - 20 | | |
| | - High Net Worth | - 18 | | |
| | - Financial intermediates | - 16 | | |
| | - Core affluent | - 12 | | |
| | - Early affluent | - 10 | | |
| | - Corporate clients | - 4 | | |
| | - Asset managers | - 4 | | |
| | - Pension funds | - 4 | | |
| | - Banks | - 1 | | |
| | - Insurance companies | - 1 | | |
| | - Hedge Funds | - 1 | | |
| | - Sovereigns | - 1 | | |
| Number of Clients Exposed | - > 10,000 | - 20 | 24 | x1 |
| | - 500 - 10,000 | - 10 | | |
| | - 51 - 500 | - 5 | | |
| | - < 50 | - 1 | | |

By way of example, Table 2 below may, for instance, represent at least some of the CID-related criteria from which a determination of the severity of the current CID exposure may be based. As indicated by Table 2 below, the severity of the current CID exposure may be calculated based on the values, default values, weighting factors, or other attributes associated with the corresponding CID-related criteria. In other examples, different ones of criteria, values, default values, weighting factors, or other attributes may be utilized in lieu of or in addition to those provided by Table 2 below.

**Table 2**

| **CID-related Criteria** | **Potential Characteristic** | **Value** | **Default value** | **Weighting factor** |
|---|---|---|---|---|
| Number of Users Exposed to CID | - > 1000 | - 0.3 | 0.3 | x2 |
| | - 50 - 1000 | - 0.3 | | |
| | - 20 - 50 | - 0.1 | | |
| | - < 20 | - 0.1 | | |
| Type of Users | - External within jurisdiction - IT | - 0.3 | 0.4 | x5 |
| | - External outside jurisdiction - IT | - 0.35 | | |
| | - External within and outside jurisdiction - IT | - 0.4 | | |
| | - External within jurisdiction - Business | - 0.2 | | |
| | - External outside jurisdiction - Business | - 0.25 | | |
| | - External within and outside jurisdiction - Business | - 0.3 | | |
| | - Technical or Automated Users (e.g., applications) | - 0.1 | | |
| | - Max Value | - 0.4 | | |
| Upload / Download Capability | - Download | - 0.4 | 0.4 | x1 |
| | - Upload | - 0.1 | | |
| | - None | - 0.0 | | |
| Cross Border Delivery | - Yes | - 1 | 1 | x3 |
| | - No | - 0.4 | | |
| Location of Physical Instance | - External | - 1 | 1 | x4 |
| | - Internal | - 0.4 | | |
| Contracting Entity (e.g., data processing) | - Switzerland or Singapore | - 1 | 1 | x6 |
| | - Other restricted locations | - 0.5 | | |
| | - Other locations | - 0.1 | | |
| Existing Protections | - Organization's standard solution | - 32 | | |
| | - Other solution | - 18 | | |
| | - No protection | - 16 | | |

In some implementations, the current CID exposure (that is indicated by the risk information included in the current state information) may relate to one or more of user interaction with CID, processing of CID, or storage of CID. User interaction with CID may, for instance, include display of CID to users, printing of CID, or other interactions which users may have with CID. Processing of CID may include direct processing of CID, use of CID for processing other information, etc. Storage of CID may include nonvolatile storage of CID by the application for which the current CID exposure is being determined, storage of CID outside of a secure database, storage of CID on a user device (e.g., user device 104), etc.

In one scenario, a combination of individual values may be generated and presented to indicate the current CID exposure. These individual values may relate to user interaction with CID, processing of CID, and storage of CID that are facilitated by the application, and the CID questionnaire may include information requests with respect to user interaction with CID, processing of CID, and storage of CID that are facilitated by the application. The inputs from the first user to the information requests in the CID questionnaire may then be utilized to determine the individual values.

In certain implementations, the compliance platform 102 may provide the one or more inputs (that are direct to the information requests of the CID questionnaire) to a second user. The compliance platform 102 may receive affirmation information associated with the one or more inputs in response to providing the one or more inputs. The current state information may be determined based on the receipt of the affirmation information. By way of example, the first user may be a software component manager for the application and the second user may be a business manager of a business division/group that utilizes the application. Once the software component manager submits his/her answers to the CID questionnaire, the submitted CID questionnaire may be provided to the business manager for review. An affirmation of the answers to the questionnaire may be needed before the current state information for the application may be determined by the compliance platform 102 based on the answers to the CID questionnaire and one or more CID-related criteria.

The compliance platform 102 may receive target state information associated with the application. In one scenario, information indicating a target state for the application may be received from a chief technology officer (CTO) for a division/group (of an organization) to which the application corresponds. For example, the information indicating the target state for the application may be received after registration of the application with the compliance platform 102, the compliance database 114, or other component of the system 100. Registration of the application may, for instance, trigger a notification to the CTO to provide the information indicating the target state for the application. Subsequently, the CTO may determine and provide the information indicating the target state based on a blueprint zone for the application.

In another scenario, the target state information for the application may be information indicating a default target state (e.g., based on a blueprint zone for the application). If, for instance, the target state information for the application is not updated by a CTO for a division/group (of an organization) to which the application corresponds, the information indicating the default target state may be utilized as the target state information for the application.

In certain implementations, the target state information may include target risk information or other state information associated with the application. The target risk information may indicate target CID exposure associated with the application, severity of the target CID exposure, and/or other information relating to the target CID exposure. In one use case, the target CID exposure and/or the severity of the target CID exposure may be determined based on the CID-related criteria for which the current CID exposure and/or the severity of the current CID exposure may be determined (e.g., Tables 1 or 2). In another use case, the target CID exposure and/or the severity of the target CID exposure may include one or more values indicating a CID exposure threshold and/or a severity threshold of CID exposure for the application.

In some implementations, the target CID exposure may relate to one or more of user interaction with CID, processing of CID, or storage of CID. In one scenario, a combination of individual values may be generated and presented to indicate the target CID exposure. These individual values may relate to user interaction with CID, processing of CID, and storage of CID that are facilitated by the application, and may be determined based on inputs by a CTO for a division/group (of an organization) to which the application corresponds.

The compliance platform 102 may provide remediation information associated with the application to one or more users. The remediation information may be determined based on the current state information and the target state information. In some implementations, the remediation information may indicate one or more remedial actions to be taken for the application to become compliant with the target state information.

In one use case, a "need to know" information control architecture may be implemented to eliminate usage of certain CID (e.g., that is designated as sensitive CID) by one or more applications, unnecessary use of CID by one or more applications, etc. For example, the target state information for the application may indicate that the application is not an application that should have access to any sensitive CID. As such, if the current state information associated with the application indicates that the application has access to some sensitive CID, the remedial actions to be taken for the application may include elimination of the access to the sensitive CID by the application. The remedial actions to be taken may be determined by the compliance platform 102, provided by compliance officer (e.g., a CTO, a design authority (DA), etc.), or determined in other ways. Elimination of the access to the sensitive CID may, for instance, include removal of application features that enable: (1) users to upload/download sensitive CID via the application; (2) access to the sensitive CID by other applications (e.g., automated users) via the application; and/or (3) other access to the sensitive CID via the application.

In another implementation, the compliance platform 102 may determine compliance status information associated with the application. By way of example, the compliance status information for the application may be defaulted to "Certification Pending" to indicate to one or more users that the application still requires one or more user actions (e.g., the CID questionnaire has not been submitted by the first user or affirmed by a second user, the target state information has not been provided by a CTO, the inputs to the information requests have not been reviewed by a DA, etc.) to provide further status information with respect to compliance of the application.

Other examples of indications by the compliance status information may include, "Fully Compliant," "Not Compliant," "Compliant with Concession," or other indications. In one use case, after a DA of a business domain (of an organization) to which the application corresponds reviews the inputs to the information requests in the CID questionnaire for the application, the DA may set the compliance status information based on the results of the review. The compliance status information may, for instance, be set to "Fully Compliant" if no changes to the application are needed for the application to be compliant with the target state information, or "Not Compliant" if changes to the application are needed for the application to become compliant with the target state information.

In some implementations, the determined compliance status information may indicate compliance of the application with the target state information based on a determination that the one or more remedial actions have been taken. In one scenario, for instance, a DA of a business domain (of an organization) to which the application corresponds may review modifications that are made to the application after the remediation information is provided to the one or more users (e.g., the first user that provided the inputs to the information requests, other users involved with facilitating compliance of the application, etc.). Upon determining that the modifications satisfy the remedial actions indicated by the remedial information and that the application is currently compliant with the target state information, the DA may certify to the compliance platform 102 that the application is "Fully Compliant," causing the compliance platform 102 to set the compliance status information to indicate compliance of the application with the target state information.

In another implementation, the compliance platform 102 may determine expiration information associated with the compliance status information. The compliance platform 102 may modify the compliance status information to indicate non-compliance of the application based on the expiration information indicating that the compliance status information has expired. In one use case, after a DA certifies that the application is compliant with the target state information in response to determining that the remedial actions indicated by the remediation information have been taken, the compliance platform 102 may set the compliance status information to indicate compliance of the application with the target state information along with an expiration date/time (e.g., a predetermined period of time, a particular date/time, etc.) on which re-certification of the application is needed. When the expiration date/time is reached, the compliance platform 102 may determine that the compliance status information has expired and may modify the compliance status information for the application to indicate that the application is "Not Compliant" with the target state information. The "Not Compliant" status may indicate to one or more users that the certification process for the application is to be repeated to ensure that the application is still compliant. In this way, an organization or other entity may ensure that their applications continue to be compliant with their respective CID target states.

In another implementation, the compliance platform 102 may provide, to the first user or another user, a second CID questionnaire that includes one or more second requests for information relating to CID exposure associated with the application. The compliance platform 102 may receive, from the first user or another user, one or more second inputs to the one or more second information requests. At least one of the one or more second information requests may include at least one of the one or more information requests (included in the previous CID questionnaire for the application). The compliance platform 102 may re-determine the current state information associated with the application based on the one or more second inputs and the one or more CID-related criteria (e.g., Tables 1 or 2).

In one scenario, upon expiration of the compliance status information for the application, detection of a significant change to the application (e.g., changes to core functionalities of the application, major updates to the application, etc.), or other triggers, re-certification of the application with respect to compliance of the application with its CID target state may be automatically initiated. The second CID questionnaire may, for instance, be an instance of the previous CID questionnaire that was filled out by a software component manager for the application. For example, the second CID questionnaire may include information requests of the previous CID questionnaire and inputs/answers to the information requests that are pre-populated for the second CID questionnaire. The pre-populated inputs/answers may be modified and/or affirmed by the software component manager before submitting the second CID questionnaire. Responsive to the submission, the current state information for the application may be re-determined based on the modified/affirmed inputs/answers along with CID-related criteria (e.g., Tables 1 or 2).

In another scenario, the second CID questionnaire may include at least some of the information requests of the previous CID questionnaire that was filled out by a software component manager for the application, but may not include pre-populated inputs/answers to the information requests. For example, the compliance platform 102 may determine that too much time has passed (e.g., a maximum threshold amount of time) since the inputs/answers to the information requests were initially provided by a software component manager. As such, the compliance platform 102 may require that the inputs/answers be re-entered for each of the information requests in the second CID questionnaire to avoid situations in which one or more information requests (that are already pre-populated with inputs/answers) may be overlooked.

In yet another scenario, new remediation information may be determined based on the re-determined current state information and the target state information (e.g., prestored target state information, updated target state information, etc.) for the application. The new remediation information may, for instance, indicate additional remedial actions to be taken for the application to become compliant with the target state information. As discussed, in this way, an organization or other entity may ensure that their applications continue to be compliant with their respective CID target states.

The communication network 108 of system 100 may include one or more networks such as a data network, a wireless network, a telephony network, and/or other communication networks. It is contemplated that the data network may be any local area network (LAN), metropolitan area network (MAN), wide area network (WAN), a public data network (e.g., the Internet), short range wireless network, and/or any other suitable packet-switched network. The wireless network may, for example, be a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium (e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth, Internet Protocol (IP) data casting, satellite, mobile ad-hoc network (MANET), etc.).

The user device 104 may be any type of mobile terminal, fixed terminal, and/or other device. For example, the user device 104 may include a desktop computer, a notebook computer, a netbook computer, a tablet computer, a smartphone, a navigation device, an electronic book device, a gaming device, and/or any other user device. Users may, for instance, utilize one or more user devices 104 to interact with the compliance platform 102 or other components of the system 100. In some implementations, the user device 104 may be the accessories and peripherals of these devices. It is also contemplated that the user device 104 may support any type of interface to the user (such as "wearable" circuitry, etc.).

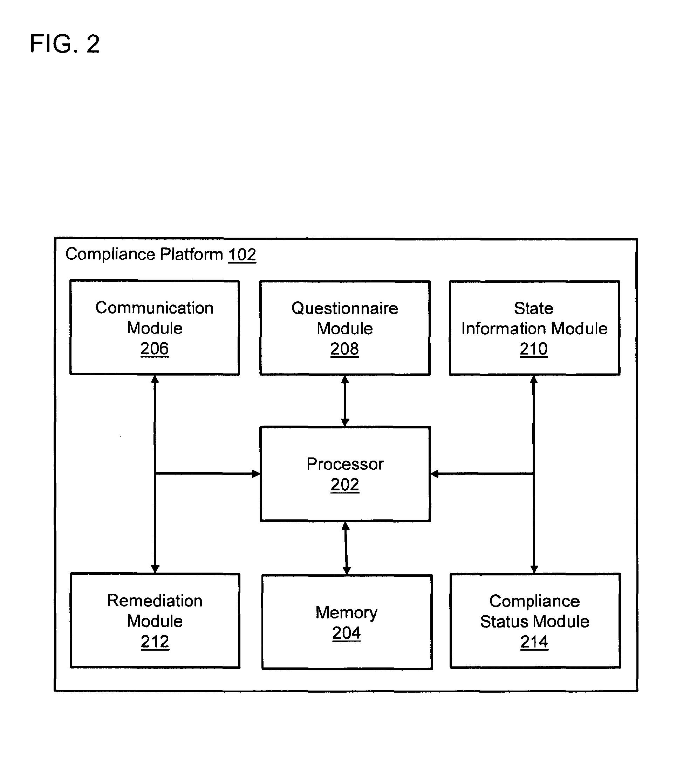

FIG. 2 illustrates a diagram of the components of the compliance platform 102, in accordance with one or more implementations. By way of example, the compliance platform 102 may include one or more components for facilitating CID target-state-compliant computer-executable applications. It is contemplated that the operations of these components may be combined in one or more components or performed by other components of equivalent functionality. In one implementation, the compliance platform 102 may include a processor 202, memory 204, a communication module 206, a questionnaire module 208, a state information module 210, a remediation module 212, a compliance status module 214, or other components.

The processor 202 may execute at least one algorithm for executing operations of the compliance platform 102. For example, in certain implementations, the processor 302 may work with the communication module 206 to facilitate communication with other components of the compliance platform 102, communication among the other components of the compliance platform 102, or communication with devices external to the compliance platform 102 (e.g., the user device 104, the compliance database 114, the service platform 110, etc.). In one use case, for instance, the communication module 206 may be utilized to: (1) transmit CID questionnaires to users; (2) receive user inputs to information requests of the transmitted CID questionnaires; (3) transmit current state information to users; (5) receive target state information; (6) transmit remediation information; or (7) provide other communication operations.

In some implementations, the processor 202 may interact with the questionnaire module 208 to generate a CID questionnaire that includes requests for information relating to CID exposure associated with an application. The questionnaire module 208 may then work with the communication module 206 to provide the CID questionnaire to a first user. In response, the questionnaire module 208 may receive (e.g., via the communication module 206) inputs to the information requests from the first user.

In various implementations, the processor 202 may work with the state information module 210 to determine current state information based on the inputs and CID-related criteria. As indicated by Tables 1 and 2 above, CID-related criteria may include types of exposed CID (e.g., the exposed CID may be determined based on the inputs to the information requests in the CID questionnaire), types of clients associated with the exposed CID, an amount of the clients associated with the exposed CID, an amount of users to which the exposed CID is accessible, types of users to which the exposed CID is accessible, domains in which the exposed CID is accessible (e.g., jurisdictions, divisions/groups, or other domain types), data protection being applied for the exposed CID, or other CID-related criteria.

The current state information may include risk information or other state information associated with the application. The risk information may indicate current CID exposure associated with the application, severity of the current CID exposure, and/or other information relating to the current CID exposure. In one implementation, the current CID exposure may relate to one or more of user interaction with CID, processing of CID, storage of CID, etc.

The state information module 210 may receive (e.g., via communication module 206) target state information associated with the application. The target state information may include target risk information or other state information associated with the application. In one implementation, the target risk information may indicate target CID exposure associated with the application. The target CID exposure may relate to one or more of user interaction with CID, processing of CID, storage of CID, etc.

In certain implementations, the processor 202 may direct the remediation module 212 to provide remediation information associated with the application to one or more users that are involved with facilitating compliance of the application with the target state information. As discussed, the remediation information may indicate remedial actions to be taken for the application to become compliant with the target state information. The remediation information may be determined based on the current state information and the target state information.

In some implementations, the processor 202 may work with the compliance status module 214 to determine compliance status information associated with the application. In one implementation, the determined compliance status information may indicate compliance of the application with the target state information based on a determination that the remedial actions indicated by the remediation information have been taken.

In various implementations, the compliance status module 214 may determine expiration information associated with the compliance status information. If, for instance, the expiration information indicates that the compliance status information has expired, the compliance status module 214 may modify the compliance status information to indicate non-compliance of the application. The non-compliance indication may alert one or more users that the certification process for the application is to be repeated to ensure that the application is still compliant. In this way, an organization or other entity may ensure that their applications continue to be compliant with their respective CID target states.

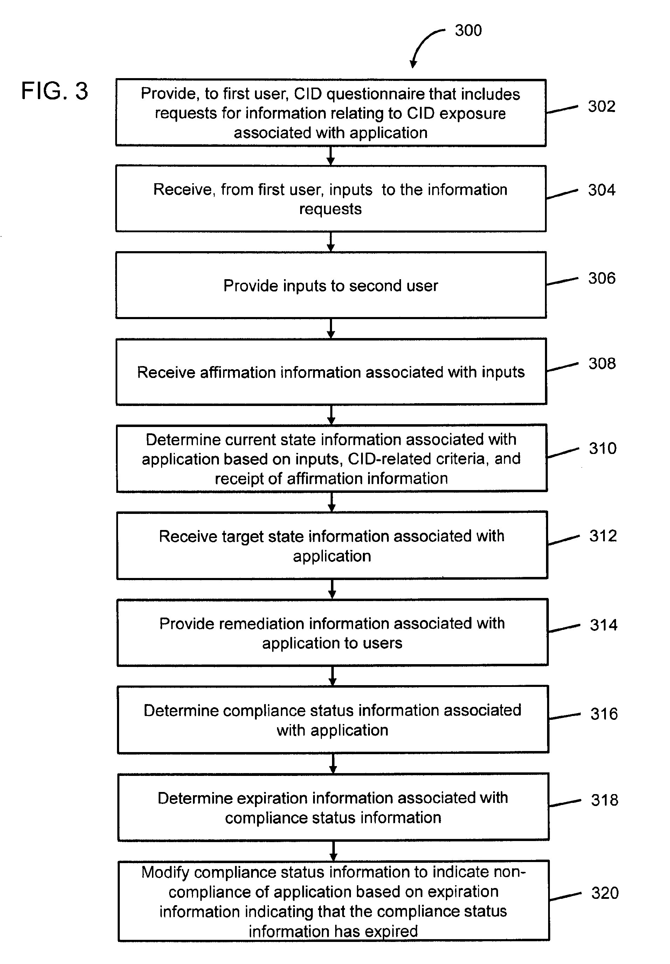

FIG. 3 illustrates a flowchart of process 300 for facilitating CID target-state-compliant computer-executable applications, in accordance with one or more implementations. The operations of process 300 presented below are intended to be illustrative. In some implementations, process 300 may be accomplished with one or more additional operations not described, and/or without one or more of the operations discussed. Additionally, the order in which the operations of process 300 are illustrated in FIG. 3 and described below is not intended to be limiting.

In certain implementations, one or more operations of process 300 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of process 300 in response to instructions stored electronically on an electronic storage medium. The one or more processing devices may include one or more devices configured through hardware, firmware, and/or software to be specifically designed for execution of one or more of the operations of process 300.

At an operation 302, a CID questionnaire that includes one or more requests for information relating to CID exposure associated with an application may be provided to a first user. Operation 302 may be performed by a questionnaire module that is the same as or similar to questionnaire module 208, in accordance with one or more implementations.

At an operation 304, one or more inputs to the one or more information requests may be received from the first user. Operation 304 may be performed by a questionnaire module that is the same as or similar to questionnaire module 208, in accordance with one or more implementations.

At an operation 306, the one or more inputs may be provided to a second user. Operation 306 may be performed by a questionnaire module that is the same as or similar to questionnaire module 208, in accordance with one or more implementations.

At an operation 308, affirmation information associated with the one or more inputs may be received. The affirmation information may be received in responsive to providing the one or more inputs. Operation 308 may be performed by a questionnaire module that is the same as or similar to questionnaire module 208, in accordance with one or more implementations.

At an operation 310, current state information associated with the application may be determined based on the one or more inputs, one or more CID-related criteria, and the receipt of the affirmation information. For example, responsive to receipt of the one or more inputs and the affirmation information, a state information module may automatically calculate the current state information using the one or more inputs and the one or more CID-related criteria. In some implementations, the current state information may include risk information or other state information associated with the application. The risk information may indicate current CID exposure associated with the application, severity of the current CID exposure, and/or other information relating to the current CID exposure. The current CID exposure may include CID exposure associated with the application at a time of the receipt of the one or more inputs. Operation 310 may be performed by a state information module that is the same as or similar to state information module 210, in accordance with one or more implementations.

At an operation 312, target state information associated with the application may be received. In certain implementations, the target state information may include target risk information or other state information associated with the application. In some implementations, the target risk information may indicate target CID exposure associated with the application. The target CID exposure may relate to one or more of user interaction with CID, processing of CID, storage of CID, etc. Operation 312 may be performed by a state information module that is the same as or similar to state information module 210, in accordance with one or more implementations.

At an operation 314, remediation information associated with the application may be provided to one or more users. In some implementations, the remediation information may be determined based on the current state information and the target state information. The remediation information may indicate one or more remedial actions to be taken for the application to become compliant with the target state information and/or other remedial actions to be taken. Operation 314 may be performed by a remediation module that is the same as or similar to remediation module 212, in accordance with one or more implementations.

At an operation 316, compliance status information associated with the application may be determined. In some implementations, the compliance status information may indicate compliance of the application with the target state information based on a determination that the one or more remedial actions have been taken. Operation 316 may be performed by a compliance status module that is the same as or similar to compliance status module 214, in accordance with one or more implementations.

At an operation 318, expiration information associated with the compliance status information may be determined. Operation 318 may be performed by a compliance status module that is the same as or similar to compliance status module 214, in accord- accordance with one or more implementations.

At an operation 320, the compliance status information may be modified to indicate non-compliance of the application based on the expiration information indicating that the compliance status information has expired. Operation 320 may be performed by a compliance status module that is the same as or similar to compliance status module 214, in accordance with one or more implementations.

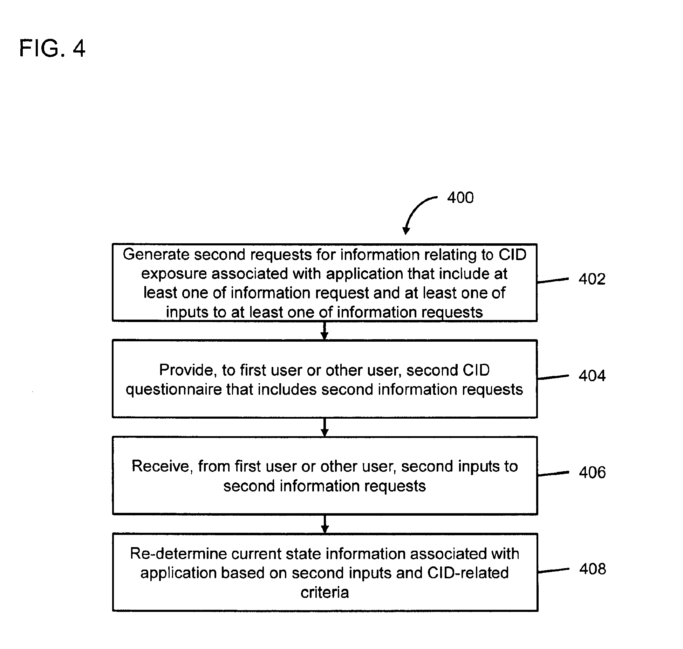

FIG. 4 illustrates a flowchart of process 400 for facilitating continued compliance with a CID target state, in accordance with one or more implementations. The operations of process 400 presented below are intended to be illustrative. In some implementations, process 400 may be accomplished with one or more additional operations not described, and/or without one or more of the operations discussed. Additionally, the order in which the operations of process 400 are illustrated in FIG. 4 and described below is not intended to be limiting.

In certain implementations, one or more operations of process 400 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of process 400 in response to instructions stored electronically on an electronic storage medium. The one or more processing devices may include one or more devices configured through hardware, firmware, and/or software to be specifically designed for execution of one or more of the operations of process 400.

As indicated, in some implementations, a CID questionnaire that includes one or more requests for information relating to CID exposure associated with an application may be provided to a first user. One or more inputs to the one or more information requests may be received from the first user. Current state information associated with the application may be determined based on the one or more inputs and one or more CID-related criteria. The current state information at the time of the receipt of the one or more inputs may, for instance, include risk information indicating CID exposure associated with the application at the time of the receipt of the one or more inputs. At one or more other times, the current state information may be re-determined to accurately represent a current state associated with the application at the other times.

For example, at an operation 402, one or more second requests for information relating to CID exposure associated with the application may be generated. The one or more second information requests may include at least one of the one or more information requests and at least one of the one or more inputs to the at least one of the one or more information requests. Operation 402 may be performed by a questionnaire module that is the same as or similar to questionnaire module 208, in accordance with one or more implementations.

At an operation 404, a second CID questionnaire that includes the one or more second information requests may be provided to the first user or another user. Operation 404 may be performed by a questionnaire module that is the same as or similar to questionnaire module 208, in accordance with one or more implementations.

At an operation 406, one or more second inputs to the one or more second information requests may be received from the first user or the other user. Operation 406 may be performed by a questionnaire module that is the same as or similar to questionnaire module 208, in accordance with one or more implementations.

At an operation 408, the current state information associated with the application may be re-determined based on the one or more second inputs and the one or more CID-related criteria. Operation 408 may be performed by a state information module that is the same as or similar to state information module 210, in accordance with one or more implementations.

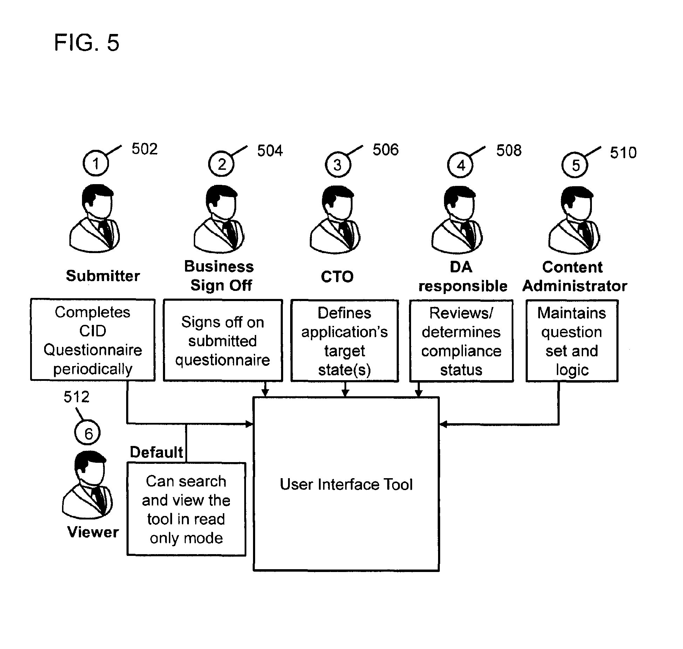

FIG. 5 illustrates a diagram of user roles for facilitating CID target-state-compliance computer-executable applications, in accordance with one or more implementations. As shown, in one scenario, users roles may include an initial submitter 502 (e.g., a software component manager or other user), a business user 504 (e.g., a business manager), a chief technology officer (CTO) 506, a design authority (DA) 508, a content administrator 510, a viewer 512, or other user roles. By way of example, the software component manager 502 of an application may complete a CID questionnaire for the application on a periodic basis (e.g., annually, bi-annually, etc.). The business manager 504 for the division/group corresponding to the application may sign-off on submitted questionnaires. The CTO 506 for the division/group may provide inputs to define a target state for the application. The DA 508 for the business domain corresponding to the application may review and determine a compliance status for the application. The content administrator 510 may maintain one or more question sets and logic for CID questionnaires. The viewer 512 may utilize a user interface to search and view results in read-only mode.

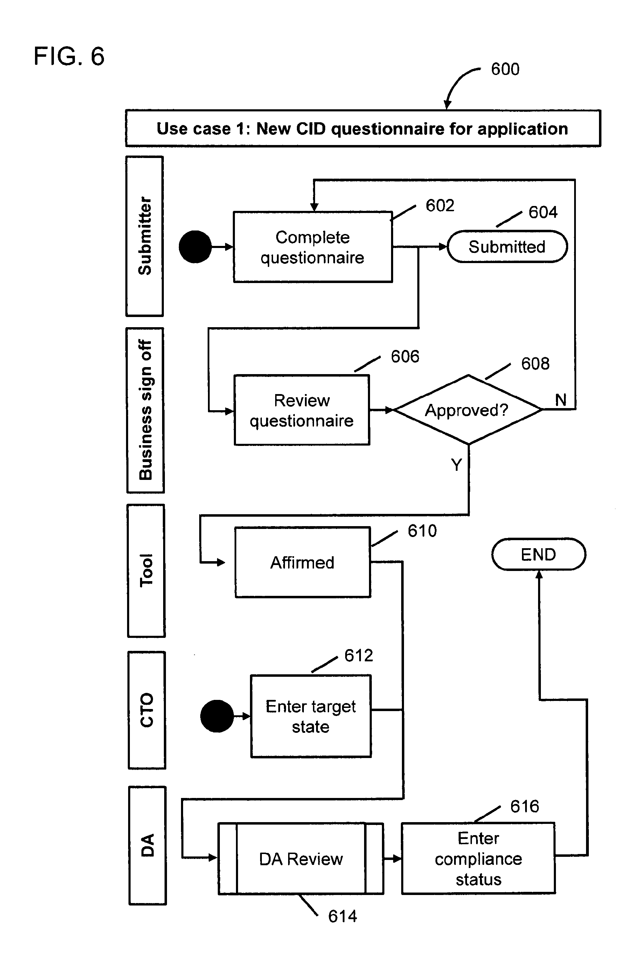

FIG. 6 illustrates a flowchart of a process for a use case of facilitating CID target-state-compliance computer-executable applications, in accordance with one or more implementations. The operations of process 600 presented below are intended to be illustrative. In some implementations, process 600 may be accomplished with one or more additional operations not described, and/or without one or more of the operations discussed. Additionally, the order in which the operations of process 600 are illustrated in FIG. 6 and described below is not intended to be limiting.

In certain implementations, one or more operations of process 600 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of process 600 in response to instructions stored electronically on an electronic storage medium. The one or more processing devices may include one or more devices configured through hardware, firmware, and/or software to be specifically designed for execution of one or more of the operations of process 600.

At an operation 602, completion of a CID questionnaire by a first user (e.g., a submitter) for an application may be facilitated. In one use case, the submitter may provide inputs to one or more requests for information relating to CID exposure associated with an application to complete the CID questionnaire. Operation 602 may be performed by a questionnaire module that is the same as or similar to questionnaire module 208, in accordance with one or more implementations.

At an operation 604, submission of the CID questionnaire may be facilitated. Submission of the CID questionnaire may, for instance, trigger review of the submitted CID questionnaire by a second user (e.g., a business manager). Operation 604 may be performed by a questionnaire module that is the same as or similar to questionnaire module 208, in accordance with one or more implementations.

At an operation 606, review of the submitted CID questionnaire by the second user (e.g., the business manager) may be facilitated. In one use case, the business manager may sign off on the submitted CID questionnaire upon review. Operation 606 may be performed by a questionnaire module that is the same as or similar to questionnaire module 208, in accordance with one or more implementations.

At an operation 608, a determination of whether the submitted CID questionnaire has been approved by the second user (e.g., the business manager). Operation 608 may be performed by a questionnaire module that is the same as or similar to questionnaire module 208, in accordance with one or more implementations. Responsive to a determination that the second user has rejected the submitted CID questionnaire, process 600 may proceed to operation 602 where the first user may modify and/or re-complete the CID questionnaire. Responsive to a determination that the second user has approved the submitted CID questionnaire, process 600 may proceed to an operation 610.

At operation 610, the CID questionnaire may be affirmed. Upon affirmation of the CID questionnaire, for instance, current state information may be determined for the application based on the inputs to the information requests in the affirmed CID questionnaire and based on CID-related criteria (e.g., Tables 1 or 2). Operation 610 may be performed by a questionnaire module that is the same as or similar to questionnaire module 208, in accordance with one or more implementations.

At an operation 612, entering of inputs by a third user (e.g., CTO) indicating the target state information for the application may be facilitated. In some implementations, the entering of the inputs indicating the target state information and the affirmation of the submitted CID questionnaire may trigger review by a third user (e.g., a DA). Operation 612 may be performed by a state information module that is the same as or similar to state information module 210, in accordance with one or more implementations.

At an operation 614, review of the current state information, target state information, the inputs to the information requests in the CID questionnaire, or other information by the third user (e.g., the DA) may be facilitated. Operation 614 may be performed by a state information module that is the same as or similar to state information module 210, in accordance with one or more implementations.

At an operation 616, entering of a compliance status by the third user (e.g., the DA) for the application may be facilitated. The compliance status may, for instance, indicate compliance of the application with the target state information, compliance of the application subject to one or more conditions, non-compliance of the application, or other status information. Operation 616 may be performed by a compliance status module that is the same as or similar to compliance status module 214, in accordance with one or more implementations.

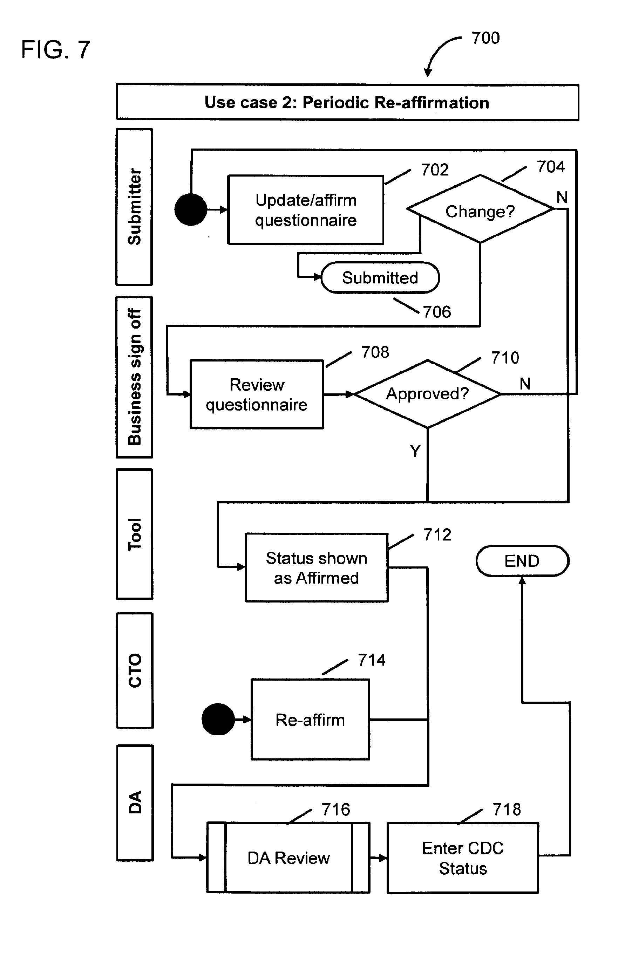

FIG. 7 illustrates a flowchart of a process for a use case of facilitating continued compliance with a CID target state, in accordance with one or more implementations. The operations of process 700 presented below are intended to be illustrative. In some implementations, process 700 may be accomplished with one or more additional operations not described, and/or without one or more of the operations discussed. Additionally, the order in which the operations of process 700 are illustrated in FIG. 7 and described below is not intended to be limiting.

In certain implementations, one or more operations of process 700 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of process 700 in response to instructions stored electronically on an electronic storage medium. The one or more processing devices may include one or more devices configured through hardware, firmware, and/or software to be specifically designed for execution of one or more of the operations of process 700.

At an operation 702, updating or affirmation of a previously submitted/affirmed CID questionnaire by a first user (e.g., a submitter) may be facilitated. In one use case, the submitter may perform modifications to one or more previously entered inputs to one or more requests for information relating to CID exposure associated with an application. In another use case, the submitter may affirm the previously entered inputs. Operation 702 may be performed by a questionnaire module that is the same as or similar to questionnaire module 208, in accordance with one or more implementations.

At an operation 704, a determination of whether the first user has made changes to the previously entered inputs for the CID questionnaire may be effectuated. Operation 704 may be performed by a questionnaire module that is the same as or similar to questionnaire module 208, in accordance with one or more implementations. Responsive to a determination that the first user has made changes to the previously entered inputs, review of the modified CID questionnaire may be triggered such that process 700 may proceed to operations 706 and 708. Responsive to a determination that the first user has affirmed the CID questionnaire and has not made changes, process 700 may proceed to an operation 712.

At operation 706, submission of the modified CID questionnaire may be facilitated. Operation 706 may be performed by a questionnaire module that is the same as or similar to questionnaire module 208, in accordance with one or more implementations. At an operation 708, review of the modified CID questionnaire by a second user (e.g., a business manager) may be facilitated. Operation 708 may be performed by a questionnaire module that is the same as or similar to questionnaire module 208, in accordance with one or more implementations.

At an operation 710, a determination of whether the submitted CID questionnaire has been approved by the second user (e.g., the business manager). Operation 710 may be performed by a questionnaire module that is the same as or similar to questionnaire module 208, in accordance with one or more implementations. Responsive to a determination that the second user has rejected the submitted CID questionnaire, process 700 may proceed to operation 702 where the first user may re-modify the CID questionnaire. Responsive to a determination that the second user has approved the submitted CID questionnaire, process 700 may proceed to an operation 712.

At operation 712, the modified or affirmed CID questionnaire may be indicated as affirmed (or re-affirmed). Upon affirmation of the CID questionnaire, for instance, current state information may be determined for the application based on the modified or affirmed inputs to the information requests in the affirmed CID questionnaire and based on CID-related criteria (e.g., Tables 1 or 2). Operation 712 may be performed by a questionnaire module that is the same as or similar to questionnaire module 208, in accordance with one or more implementations.

At an operation 714, re-affirming (or updating) of the target state information for the application may be facilitated. In some implementations, the re-affirmation of the target state information and the affirmation of the CID questionnaire may trigger a re-review by a third user (e.g., a DA). Operation 714 may be performed by a state information module that is the same as or similar to state information module 210, in accordance with one or more implementations.

At an operation 716, review (or re-review) of the current state information, the target state information, the modified or affirmed inputs to the information requests in the CID questionnaire, or other information by the third user (e.g., the DA) may be facilitated. Operation 716 may be performed by a state information module that is the same as or similar to state information module 210, in accordance with one or more implementations.

At an operation 718, entering of a compliance status by the third user (e.g., the DA) for the application may be facilitated. The compliance status may, for instance, indicate compliance of the application with the target state information, compliance of the application subject to one or more conditions, non-compliance of the application, or other status information. Operation 718 may be performed by a compliance status module that is the same as or similar to compliance status module 214, in accordance with one or more implementations.

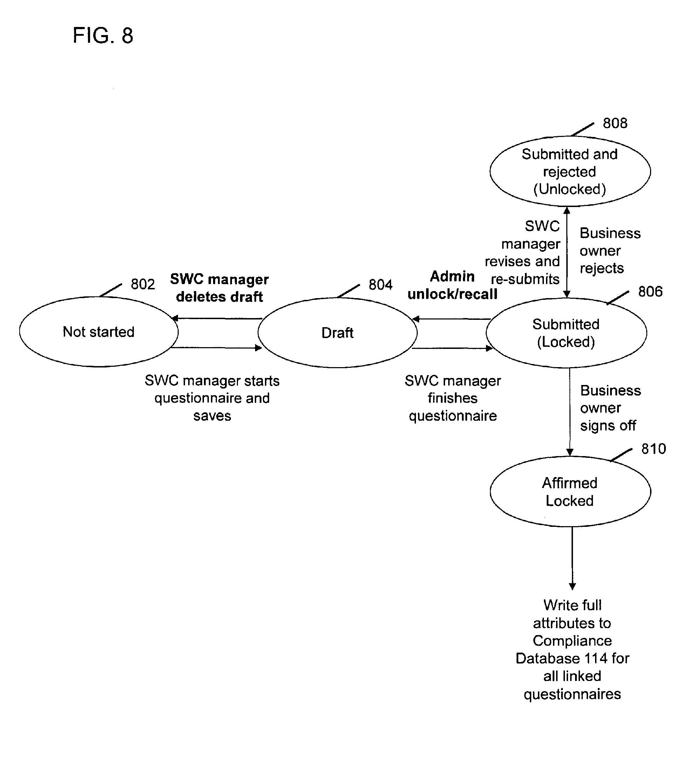

FIG. 8 illustrates a diagram of various states of a CID questionnaire, in accordance with one or more implementations. In one scenario, a "not started" state 802 may be a default state of a CID questionnaire for an application. The CID questionnaire may transition to a "draft" state 804 once a submitter has started and saved the CID questionnaire without submitting. The CID questionnaire may transition to a "submitted" state 806 once the submitter has finished and submitted the CID questionnaire. Prior to submission, the submitter may, for instance, delete his/her instance of the CID questionnaire. After submission, the submitter may delete additional clone instances of the CID questionnaire.

Upon submission, the CID questionnaire may be sent to a business manager for review and approval. As shown, the submitter may not be able to change inputs to questions or other information requests in the CID questionnaire when the CID questionnaire is in the "submitted" state 806. However, as depicted, an administrator may be enabled to unlock a submitted CID questionnaire and cause the CID questionnaire to transition from a "submitted" state 806 to a "draft" state 804.

If, for instance, the business manager rejects the submitted CID questionnaire, the CID questionnaire may transition to a "submitted and rejected" state 808 such that the submitter may be enabled to make modifications to the submitter's previously inputs for the CID questionnaire and re-submit the CID questionnaire.

If the business manager approves the submitted or re-submitted CID questionnaire, the CID questionnaire may transition to an "affirmed" state 810. Once affirmed, the inputs to the questions or other information requests in the CID questionnaire with respect to the application may be stored in the compliance database 114.

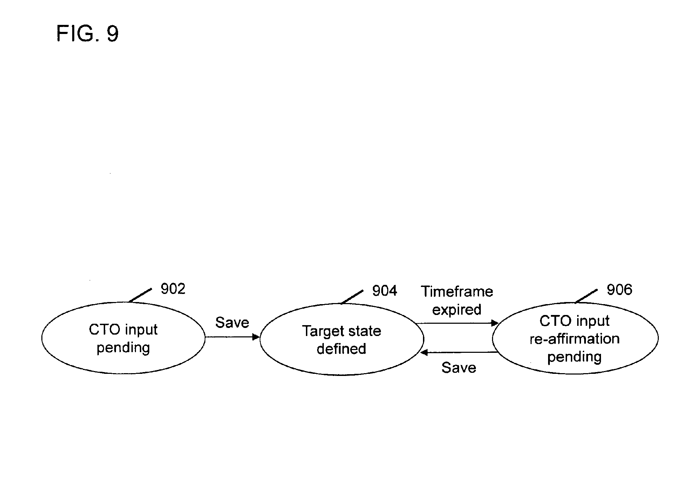

FIG. 9 illustrates a diagram of various states with respect to a CID target state, in accordance with one or more implementations. In one use case, a "CTO input pending" state 902 may be a default state associated with the CID target state for an application when no CTO input indicating the CID target state has been entered. Once such inputs have been entered, the CID target state for the application may transition to a "target state defined" state 904. When the CID target state has expired (e.g., as determined by the compliance platform 102 based on a predetermined time period, an expiration time/date, etc.), the CID target state may transition to a "CTO input re-affirmation pending" state 906 to indicate that re-affirmation of the CID target state by the CTO is needed. Once re-affirmed, the CID target state may transition back to the "target state defined" state 904.

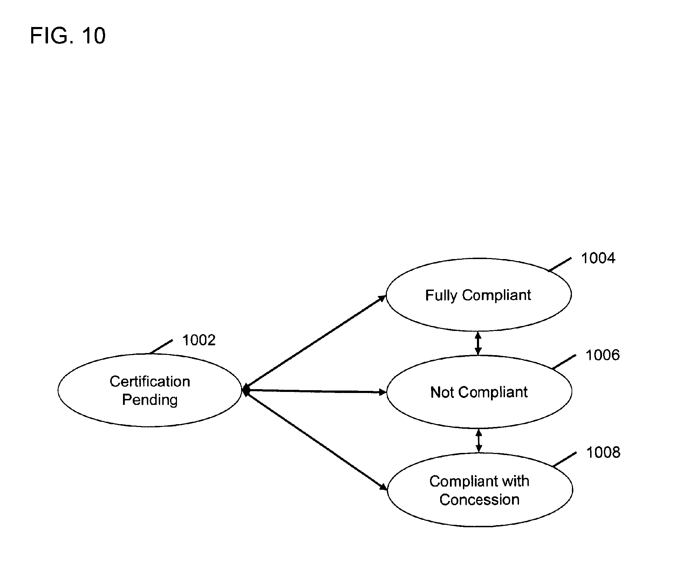

FIG. 10 illustrates a diagram of various states of a compliance status, in accordance with one or more implementations. In one use case, the compliance status may indicate one or more of the states 1002, 1004, 1006, or 1008 (e.g., "Certification Pending," "Fully Compliant," "Not Compliant," or "Compliant with Concession."

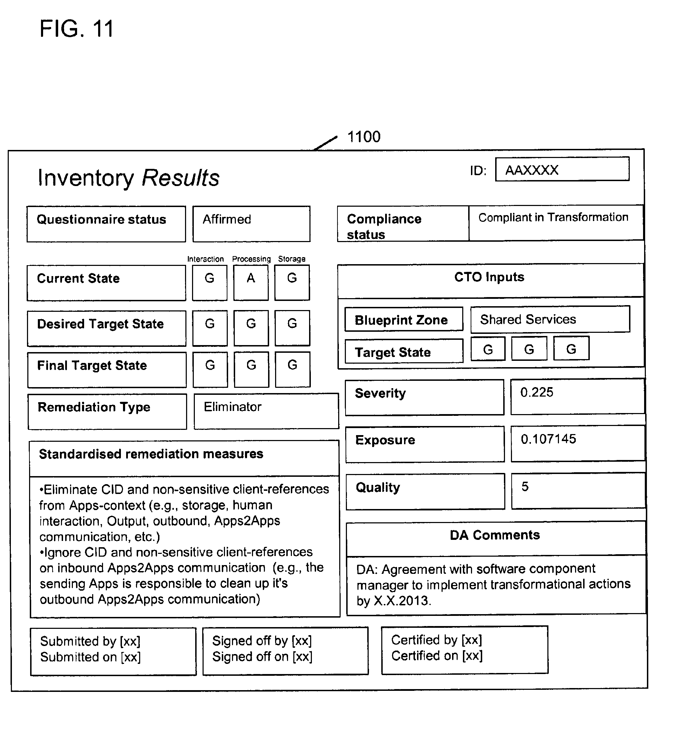

FIG. 11 illustrates a diagram of a user interface 1100 depicting current state information, target state information, and/or other information associated with an application, in accordance with one or more implementations. As shown, the current state information of an application (e.g., having the identifier "AAXXXXX") and the target state information of the application are indicated via red-amber-green (RAG) status. Green may, for instance, indicate that no CID (e.g., direct, indirect, or potential when combined with other data) and no sensitive references are in use. Amber may indicate that non-sensitive references are in use. Red may indicate that CID or sensitive references are in use. Examples of CID may include names, addresses, account numbers, or other data identifying a client (e.g., "First-Name Last-Name," "Address-1 Address-2," 230-123456.9h9, etc.). Examples of sensitive references may include one or more artificial combinations of attributes that form identifiers (e.g., First-Name_Address-1_Last-Name_01), or other sensitive references. Examples of non-sensitive references may include one or more identifiers derived from a hashing of plain CID attributes or a mapping table (e.g., Xas987asdf98asdf9a), or other non-sensitive references.

As shown by the user interface 1100, individual ones of the RAG status values may relate to user interaction with CID, processing of CID, or storage of CID. The RAG status for a current state for the application is "GAG." The RAG status for a desired target state (e.g., indicated by a software component manager prior to submission of the associated CID questionnaire) for the application is "GGG." A target state indicated by a CTO for the application is "GGG." In one scenario, a final target state for the application may be calculated based on the most restrictive of the desired target state and the target state indicated by the CTO. In this case, the final target state for the application is "GGG."

Still referring to FIG. 11, the user interface 1100 may reveal further details with respect to the current state information for the application, including current CID exposure, severity of the current CID exposure, and/or other information. In addition, among other information, the user interface 110 may indicate standardized remediation measures to be applied to the application for the application to become compliant with the final target state, the remedial type associated with the remedial measures (e.g., Master, Mitigator, Eliminator, Adopter, etc.), compliance status information for the application (e.g., Compliant in Transformation), and the comments of the DA.

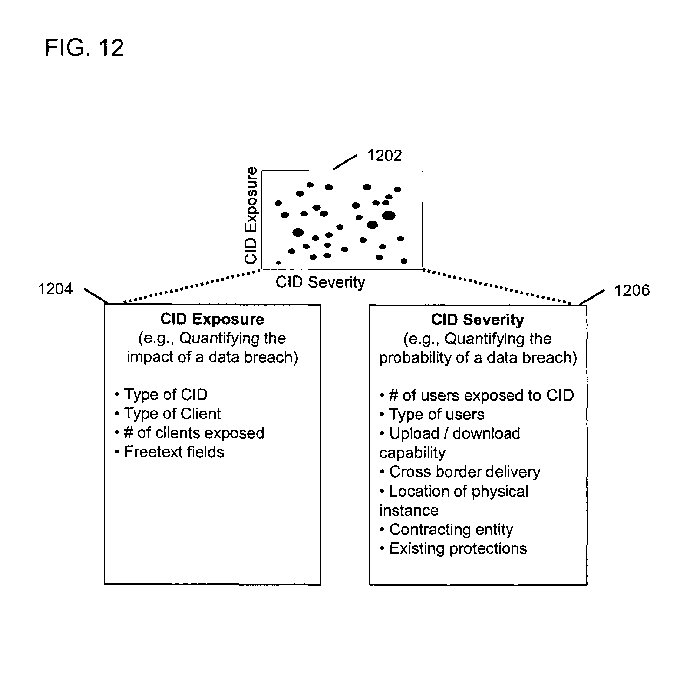

FIG. 12 illustrates a diagram of an exposure/severity chart 1202 along with CID-related criteria from which the exposure/severity chart 1202 may be based, in accordance with one or more implementations. Tables 1204 and 1206 may, for instance, indicate one or more CID-related criteria for which the exposure/severity chart 1202 may be based.

Although the present invention has been described in detail for the purpose of illustration based on what is currently considered to be the most practical and preferred implementations, it is to be understood that such detail is solely for that purpose and that the invention is not limited to the disclosed implementations, but, on the contrary, is intended to cover modifications and equivalent arrangements that are within the spirit and scope of the appended claims. For example, it is to be understood that the present invention contemplates that, to the extent possible, one or more features of any implementation can be combined with one or more features of any other implementation.

## Claims

1. A method of facilitating client identifying data (CID) target-state-compliant computer-executable applications, the method being implemented on a computer that includes one or more processors, the method comprising:
providing, to a first user, a CID questionnaire that includes one or more requests for information relating to CID exposure associated with an application;
receiving, from the first user, one or more inputs to the one or more information requests;
determining current state information associated with the application based on the one or more inputs and one or more CID-related criteria, wherein the current state information includes risk information indicating current CID exposure associated with the application;
receiving target state information associated with the application; and
providing remediation information associated with the application to one or more users, wherein the remediation information is determined based on the current state information and the target state information.

2. The method of claim 1, wherein the remediation information indicates one or more remedial actions to be taken for the application to become compliant with the target state information.

3. The method of claim 2, further comprising determining compliance status information associated the application.

4. The method of claim 3, wherein the compliance status information indicates compliance of the application with the target state information based on a determination that the one or more remedial actions have been taken.

5. The method of claim 4, further comprising:
determining expiration information associated with the compliance status information; and
modifying the compliance status information to indicate non-compliance of the application based on the expiration information indicating that the compliance status information has expired.

6. The method of one of claims 1-5, further comprising:
providing, to the first user or another user, a second CID questionnaire that includes one or more second requests for information relating to CID exposure associated with the application, wherein at least one of the one or more second information requests includes at least one of the one or more information requests;
receiving, from the first user or another user, one or more second inputs to the one or more second information requests; and
re-determining the current state information associated with the application based on the one or more second inputs and the one or more CID-related criteria.

7. The method of one of claims 1-6, wherein the target state information indicates target CID exposure relating to one or more of user interaction with CID, processing of CID, or storage of CID.

8. The method of one of claims 1-7, further comprising:
providing the one or more inputs to a second user; and
receiving affirmation information associated with the one or more inputs in response to providing the one or more inputs, wherein the current state information is determined based on the receipt of the affirmation information.

9. The method of one of claims 1-8, wherein the risk information indicates severity of the current CID exposure.

10. The method of claim 9, wherein the current CID exposure is determined based on one or more of CID types of exposed CID, types of clients associated with the exposed CID, or an amount of the clients associated with the exposed CID, and wherein the severity of the current CID exposure is determined based on one or more of an amount of users to which the exposed CID is accessible, types of users to which the exposed CID is accessible, domains in which the exposed CID is accessible, or data protection being applied for the exposed CID.

11. A system for facilitating client identifying data (CID) target-state-compliant computer-executable applications, the system including one or more processors executing one or more computer program modules that cause the system to:
provide, to a first user, a CID questionnaire that includes one or more requests for information relating to CID exposure associated with an application;
receive, from the first user, one or more inputs to the one or more information requests;
determine current state information associated with the application based on the one or more inputs and one or more CID-related criteria, wherein the current state information includes risk information indicating current CID exposure associated with the application;
receive target state information associated with the application; and
provide remediation information associated with the application to one or more users, wherein the remediation information is determined based on the current state information and the target state information.

12. The system of claim 11, wherein the remediation information indicates one or more remedial actions to be taken for the application to become compliant with the target state information.

13. The system of claim 12, wherein the system is caused to determine compliance status information associated the application.

14. The system of claim 13, wherein the compliance status information indicates compliance of the application with the target state information based on a determination that the one or more remedial actions have been taken.

15. The system of claim 14, wherein the system is caused to:
determine expiration information associated with the compliance status information; and
modify the compliance status information to indicate non-compliance of the application based on the expiration information indicating that the compliance status information has expired.

16. The system of one of claims 11-15, wherein the system is caused to:
provide, to the first user or another user, a second CID questionnaire that includes one or more second requests for information relating to CID exposure associated with the application, wherein at least one of the one or more second information requests includes at least one of the one or more information requests;
receive, from the first user or another user, one or more second inputs to the one or more second information requests; and
re-determine the current state information associated with the application based on the one or more second inputs and the one or more CID-related criteria.

17. The system of one of claims 11-16, wherein the target state information indicates target CID exposure relating to one or more of user interaction with CID, processing of CID, or storage of CID.

18. The system of one of claims 11-17, wherein the system is caused to:
provide the one or more inputs to a second user; and
receive affirmation information associated with the one or more inputs in response to providing the one or more inputs, wherein the current state information is determined based on the receipt of the affirmation information.

19. The system of one of claims 11-18, wherein the risk information indicates severity of the current CID exposure.

20. The system of claim 19, wherein the current CID exposure is determined based on one or more of CID types of exposed CID, types of clients associated with the exposed CID, or an amount of the clients associated with the exposed CID, and wherein the severity of the current CID exposure is determined based on one or more of an amount of users to which the exposed CID is accessible, types of users to which the exposed CID is accessible, domains in which the exposed CID is accessible, or data protection being applied for the exposed CID.

## Amended claims

### Amended claims in accordance with Rule 137(2) EPC.

**1.** A method (300) of facilitating client identifying data, CID, target-state-compliant computer-executable applications, the method being implemented on a computer that includes one or more processors, the method comprising:
providing (302), to a first user, a CID questionnaire that includes one or more requests for information relating to CID exposure associated with an application;
receiving (304), from the first user, one or more inputs to the one or more information requests;
determining (310) current state information associated with the application based on the one or more inputs and one or more CID-related criteria, wherein the current state information includes risk information indicating current CID exposure associated with the application, wherein the risk information indicates severity of the current CID exposure;
- wherein the current CID exposure is determined based on one or more of the following first CID-related criteria:
-- CID types of exposed CID,
-- types of clients associated with the exposed CID, or
-- an amount of the clients associated with the exposed CID, and
- wherein the severity of the current CID exposure is determined based on one or more of the following second CID-related criteria:
-- an amount of users to which the exposed CID is accessible,
-- types of users to which the exposed CID is accessible,
-- domains in which the exposed CID is accessible, or
-- data protection being applied for the exposed CID;
calculating the current CID exposure based on the one or more first CID-related criteria and first potential characteristics related to the one or more inputs;
calculating the severity of the current CID exposure based on the one or more second CID-related criteria and second potential characteristics related to the one or more inputs;
receiving (312) target state information associated with the application; and
providing (314) remediation information associated with the application to one or more users, wherein the remediation information is determined based on the current state information and the target state information, and wherein the step of providing the remediation information further comprises displaying a user interface (1100) indicating:
- the remediation information indicating one or more remedial actions to be taken for the application to become compliant with the target state information;
- the current CID exposure; and
- the severity of the current CID exposure.

**2.** The method of claim 1, further comprising determining (316) compliance status information associated the application.

**3.** The method of claim 2, wherein the compliance status information indicates compliance of the application with the target state information based on a determination that the one or more remedial actions have been taken.

**4.** The method of claim 3, further comprising:
determining (318) expiration information associated with the compliance status information; and
modifying (320) the compliance status information to indicate non-compliance of the application based on the expiration information indicating that the compliance status information has expired.

**5.** The method of one of claims 1 to 4, further comprising:
providing (404), to the first user or another user, a second CID questionnaire that includes one or more second requests for information relating to CID exposure associated with the application, wherein at least one of the one or more second information requests includes at least one of the one or more in-formation requests;
receiving (406), from the first user or another user, one or more second inputs to the one or more second information requests; and
re-determining (408) the current state information associated with the application based on the one or more second inputs and the one or more CID-related criteria.

**6.** The method of one of claims 1 to 5, wherein the target state information indicates target CID exposure relating to one or more of user interaction with CID, processing of CID, or storage of CID.

**7.** The method of one of claims 1 to 6, further comprising:
providing (306) the one or more inputs to a second user; and
receiving (308) affirmation information associated with the one or more inputs in response to providing the one or more inputs, wherein the current state information is determined based on the receipt of the affirmation information.

**8.** A system (100) for facilitating client identifying data, CID, target-state-compliant computer-executable applications, the system including one or more processors executing one or more computer program modules that cause the system to:
provide, to a first user, a CID questionnaire that includes one or more requests for information relating to CID exposure associated with an application;
receive, from the first user, one or more inputs to the one or more information requests;
determine current state information associated with the application based on the one or more inputs and one or more CID-related criteria, where-in the current state information includes risk information indicating current CID exposure associated with the application, wherein the risk information indicates severity of the current CID exposure;
- wherein the current CID exposure is determined based on one or more of the following first CID-related criteria:
-- CID types of exposed CID,
-- types of clients associated with the exposed CID, or
-- an amount of the clients associated with the exposed-CID, and
- wherein the severity of the current CID exposure is determined based on one or more of the following second CID-related criteria:
-- an amount of users to which the exposed CID is accessible,
-- types of users to which the exposed CID is accessible,
-- domains in which the exposed CID is accessible, or
-- data protection being applied for the exposed CID;
calculate the current CID exposure based on the one or more first CID-related criteria and first potential characteristics related to the one or more inputs;
calculate the severity of the current CID exposure based on the one or more second CID-related criteria and second potential characteristics related to the one or more inputs;
receive target state information associated with the application; and
provide remediation information associated with the application to one or more users, wherein the remediation information is determined based on the current state information and the target state information, and wherein, in the operation of providing the remediation information, the one or more processors are further configured to cause the system to display a user interface (1100) indicating:
- the remediation information indicating one or more remedial actions to be taken for the application to become compliant with the target state information;
- the current CID exposure; and
- the severity of the current CID exposure.

**9.** The system of claim 8, wherein the system is caused to determine compliance status information associated the application.

**10.** The system of claim 9, wherein the compliance status information indicates compliance of the application with the target state information based on a determination that the one or more remedial actions have been taken.

**11.** The system of claim 10, wherein the system is caused to:
determine expiration information associated with the compliance status information; and
modify the compliance status information to indicate non-compliance of the application based on the expiration information indicating that the compliance status information has expired.

**12.** The system of one of claims 8 to 11, wherein the system is caused to:
provide, to the first user or another user, a second CID questionnaire that includes one or more second requests for information relating to CID exposure associated with the application, wherein at least one of the one or more second information requests includes at least one of the one or more in-formation requests;
receive, from the first user or another user, one or more second inputs to the one or more second information requests; and
re-determine the current state information associated with the application based on the one or more second inputs and the one or more CID-related criteria.

**13.** The system of one of claims 8 to 12, wherein the target state information indicates target CID exposure relating to one or more of user interaction with CID, processing of CID, or storage of CID.

**14.** The system of one of claims 8 to 13, wherein the system is caused to:
provide the one or more inputs to a second user; and
receive affirmation information associated with the one or more inputs in response to providing the one or more inputs, wherein the current state in-formation is determined based on the receipt of the affirmation information.
